# EUROPEAN PATENT SPECIFICATION

(11) **EP 2 606 450 B1**
(45) Date of publication and mention of the grant of the patent: **02.09.2015**
(21) Application number: 11818526.3
(22) Date of filing: 25.07.2011
(51) Int. Cl.: G06F 9/44, G06F 9/30, G06F 9/06, G06F 21/57, G06F 21/56, G06F 21/53

(54) **METHOD AND APPARATUS FOR ENFORCING A MANDATORY SECURITY POLICY ON AN OPERATING SYSTEM (OS) INDEPENDENT ANTI-VIRUS (AV) SCANNER**
VERFAHREN UND VORRICHTUNG ZUR DURCHSETZUNG EINER OBLIGATORISCHEN SICHERHEITSRICHTLINIE AUF EINEM BETRIEBSSYSTEMUNABHÄNGIGEN ANTIVIRENSCANNER
PROCÉDÉ ET APPAREIL D'APPLICATION D'UNE POLITIQUE DE SÉCURITÉ OBLIGATOIRE SUR UN SCANNER ANTI-VIRUS (AV) INDÉPENDANT DU SYSTÈME D'EXPLOITATION (SE)

(30) Priority: 18.08.2010 US 858882
(43) Date of publication of application: 26.06.2013
(73) Proprietor: Intel Corporation, Santa Clara, CA 95052 (US)
(72) Inventor: SMITH, Ned M., Hillsboro Oregon 97124 (US); DANNEELS, Gunner D., Beaverton Oregon 97007 (US); SHANBHOGUE, Vedvyas, Portland Oregon 97229 (US); SUGUMAR, Suresh, KA 560037 (IN)
(74) Representative: Goddar, Heinz J.
(86) International application number: PCT/US2011/045158
(87) International publication number: WO 2012/024057

(56) References cited:
- US-A1- 2007 005 957
- US-A1- 2008 109 903
- US-A1- 2009 089 879
- US-A1- 2009 172 663
- US-A1- 2009 172 822
- US-A1- 2009 217 372
- US-A1- 2009 327 679

## Description

### FIELD

The present disclosure generally relates to the field of computing. More particularly, an embodiment of the invention relates to enforcing mandatory security policies for anti-virus scan agents running in a computing system.

### BACKGROUND

Anti-virus (AV) scan agent application programs typically run as operating system (OS) processes. AV scan agents protect themselves from malware/rootkit attacks by employing some the same stealth techniques employed by malware. Recent changes in OS design employ mandatory access control (MAC) labels that tag processes in terms of low, medium, and high integrity classification. Processes at different levels are not allowed to modify/access each other. However, the MAC level semantics are enforced at the OS Ring-0 (kernel privilege). Compromise of Ring-0 implies a compromise of the MAC enforcement mechanism and therefore compromise of AV scan agents running in Ring-3 (user privilege) and Ring-0. Compromise of a virtual memory manager (VMM) (if used) also may result in compromise of the user OS (UOS) MAC mechanism. Use of MAC mechanisms in the OS makes it more difficult for AV scan agents to hide from malware targeting AV scan agent code. Therefore, AV scan agent code is more vulnerable despite improvements in OS security. Patent documents US 2009/172822 A1 and US 2009/172663 A1 disclose methods for verifying the integrity of loaded components and setting up secure communications between partitions or components in a virtualized platform. Patent document US 2009/089879 A1 discloses a method to protect an anti-virus component through operating it in a secure virtual machine.

### BRIEF DESCRIPTION OF THE DRAWINGS

The detailed description is provided with reference to the accompanying figures. The use of the same reference numbers in different figures indicates similar or identical items.
Figure 1 is a diagram of an execution container integrity model in accordance with some embodiments of the invention;
Figure 2 illustrates an execution container integrity model with a guest OS according to an embodiment of the present invention;
Figure 3 is a diagram of an execution container integrity model with a guest OS having an AV application according to an embodiment of the present invention;
Figure 4 is a flow diagram for establishing a C domain according to an embodiment of the present invention;
Figure 5 is a diagram illustrating cascading Biba levels corresponding to a sequence of resource trapping mechanisms according to an embodiment of the present invention;
Figure 6 is a flow diagram illustrating establishing sub-C domains according to an embodiment of the present invention;
Figure 7 is a flow diagram illustrating setting an application trap according to an embodiment of the present invention;
Figure 8 is a flow diagram illustrating setting an application trap according to another embodiment of the present invention;
Figure 9 is a flow diagram illustrating executing a trap according to an embodiment of the present invention;
Figure 10 is a diagram of an execution container integrity model with a guest OS as applied to a virtual machine manager (VMM) according to another embodiment of the present invention;
Figure 11 is a diagram of an execution container integrity model with a guest OS as applied to a VMM, wherein a virtual machine includes an AV application according to an embodiment of the present invention; and
Figures 12 and 13 illustrate block diagrams of embodiments of computing systems, which may be utilized to implement some embodiments discussed herein.

### DETAILED DESCRIPTION

In the following description, numerous specific details are set forth in order to provide a thorough understanding of various embodiments. However, various embodiments of the invention may be practiced without the specific details. In other instances, well-known methods, procedures, components, and circuits have not been described in detail so as not to obscure the particular embodiments of the invention. Further, various aspects of embodiments of the invention may be performed using various means, such as integrated semiconductor circuits ("hardware"), computer-readable instructions organized into one or more programs stored on a computer readable storage medium ("software"), or some combination of hardware and software. For the purposes of this disclosure reference to "logic" shall mean either hardware, software (including for example micro-code that controls the operations of a processor), firmware, or some combination thereof.

In an embodiment, an AV scan agent application program may be executed in a protected execution environment in a computing system where the AV scan agent may be assigned a MAC privilege that dominates the MAC privileges employed by the user operating system (UOS) (or a virtual machine manager (VMM)). The AV scan agent configures memory pages containing a UOS agent that are protected using the protected execution environment. These memory pages have effective MAC privileges that exceed the highest privilege granted by the UOS (or VMM) hence, compromise of the UOS does not translate to compromise of the AV scan agent in the UOS.

Embodiments of the present invention employ a combination of at least two technologies: protected execution environment microcode and MAC labels applied at a hardware level, separate from operating system MAC abstractions. Execution containers within the protected execution environment provide execution isolation for the AV scan agent runtime operating at a security level that is "higher" than the highest possible OS ring-0 level. This level is enforced by the protected execution environment. Because the protected execution environment respects the MAC security model, the protected execution environment may prevent malicious modification of the AV scan agent runtime while still allowing read access to OS file system objects. Embodiments of the present invention uniformly associate MAC labels, while setting traps on guest OS resources. The methodology of an embodiment cascades label assignment with trap assignment recursively over guest resources and pages until the AV scan agent application and associated data are protected. Malware attempts to modify protected resources may be detected and prevented by the processor of the computing system. Recovery from detected attacks may be administered by a handler agent program running at a higher integrity level from the protected execution environment without violating the system integrity model.

MAC security models protect information by assigning a security label to subjects and objects in the system. One such MAC security model is the Biba model, as disclosed in Biba, K.J. "Integrity Considerations for Secure Computer Systems" MTR-3153, The Mitre Corporation, April 1977. The Biba Integrity Model is a formal state transition system of computer system security policy that describes a set of access control rules designed to ensure data integrity. Data and subjects are grouped into ordered levels of integrity. The model is designed so that subjects may not corrupt data in a level ranked higher than the subject, or be corrupted by data from a lower level than the subject. In general, preservation of data integrity has the goals of preventing data modification by unauthorized parties, preventing unauthorized data modification by authorized parties, and maintaining internal and external consistency (i.e., data reflects the real world). This security model is directed toward data integrity and is characterized by the phrase "no read down, no write up." The Biba MAC rules may be summarized as: 1) Resources (subjects and objects) are given a Biba integrity label such that a higher level "dominates" a lower level. Subjects that dominate objects or other subjects can "write down" to those resources. 2) Lower level resources can "read up" to higher-level resources.

The Biba model may be applied to a protected execution environment such that devices, memory, direct memory access (DMA) buffers, interrupts and configuration space can be stereotyped with Biba labels such that the Biba access rules can be uniformly applied. Applications running in a protected execution environment where the OS running in an execution container enforces the Biba security model may be assigned virtualization resources corresponding to MAC label constraints. A resource manager component of the protected execution environment may be trusted to enforce privilege semantics across the hardware interface boundary between the execution container (protected memory) and device resources.

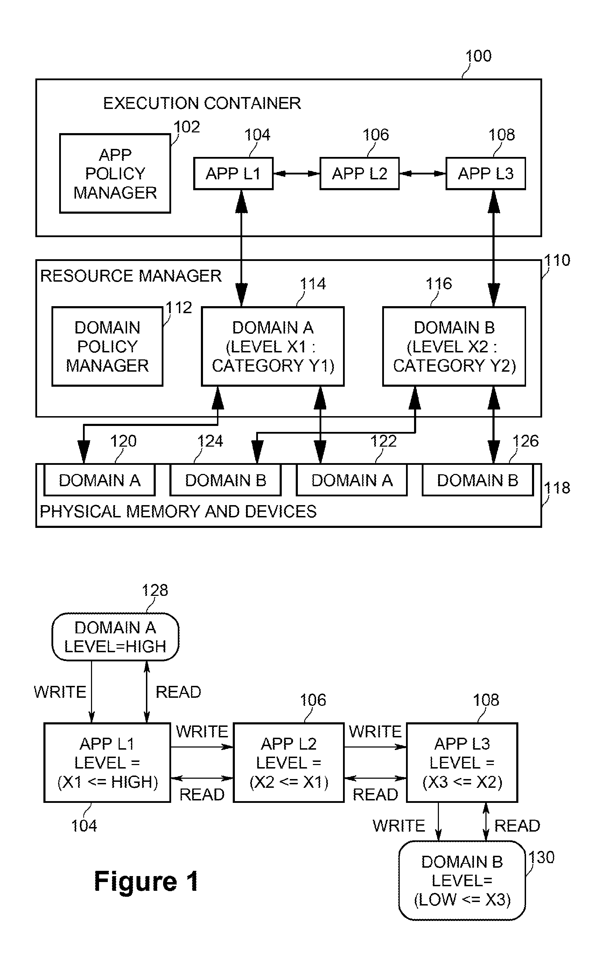

Figure 1 is a diagram of an execution container integrity model in accordance with some embodiments of the invention. A protected execution environment may enforce a Biba security policy over applications running in an Execution Container 100. An execution container comprises an application environment within a computing system that is isolated from the normal OS environment. In an embodiment, the execution container may be constrained in its functionality; the execution container may not include a full featured OS. In an embodiment, the execution container comprises an Application (App) Policy Manager component 102, and one or more application programs. In the example shown in Figure 1, the Execution Container includes an application at a first level of integrity (App L1 104), an application at a second level of integrity (App L2 106), and an application at a third level of integrity (App L3 108).

In an embodiment, the protected execution environment provides a mechanism to create execution containers in the computing system by partitioning the platform resources (central processing unit (CPU), memory, chipset, flash, etc.) using hardware support for arbitrating accesses to these resources. The intent is that in addition to the container for the user OS (UOS), other independent operating environments could run, typically taking advantage of cycles on cores in a multi-core processor that are unused as the UOS takes cores offline during low activity for power savings. This will have a slight impact on power consumption and performance, but provides an environment for a program execution that could be used for activities out of band (OOB) of the UOS, such as security, manageability, secure commerce, or licensing. With an OOB execution environment, applications running in these containers will be safe from user tampering, malware, and resistant to OS failures. To enable this functionality, several new hardware features may be added to the processor (such as a timer, device filtering, scheduling buffers, page tables, interrupt mapping support, and space in flash memory), an extensive software stack may also be needed (kernel, UOS drivers, kernel drivers, firmware, etc.), and uncore patching support may also be needed. Each execution container will have memory that is separate (including individual extended page tables (EPTs)), their own state, a way to control the time slices needed to execute on the processor, and the potential for dedicated access to hardware devices (enforced through device filtering, local Advanced Programmable Interrupt Controllers (APICs) and interrupt remapping). One example of a protected execution environment and a usage model for improving power efficiency in a computing system is disclosed in Kumar, et al., "Method and Apparatus for Cost and Power Efficient Scalable OS-Independent Services," filed December 26, 2007, serial number 11/964,439, assigned to the assignee of the present application, and hereby cited by reference.

In an embodiment, applications communicate with a protected execution environment resource manager (RM) 110. In an embodiment, the RM may be implemented as micro-code in the processor of the computing system, and create threads to run at different integrity levels. In an embodiment, the RM may run as a separate hyper-thread which is not accessible by Ring-0 or Ring-3 processes. The RM's protected hyper-thread may be instantiated during system boot processing, and may be scheduled but not modified by the OS. Enforcing Biba security policies over applications running in the Execution Container 100 may be achieved by having the RM 110 operate at a higher integrity level than the Execution Container such that any attempt on behalf of the Execution Container to modify or subvert the RM constitutes a violation of the security policy. The RM can establish trust in the Execution Container as part of loading and verifying the OS in the Execution Container. In an embodiment, the Execution Container launch control policy asserts that Execution Container capabilities include the ability to enforce Biba security rules.

A Domain Policy Manager 112 in the RM assigns a range of Biba labels (i.e. privileges) to the Application Policy Manager 102. The Domain Policy Manager keeps track of labels that domains can run at in the processor. The Execution Container enforces Biba rules according to the range supplied. The Application Policy Manager then assigns privileges to Execution Container applications from within that range. This ensures semantic consistency of Biba levels system-wide even though the Execution Container may not have a global view of all computing platform resources. RM 110 provides a plurality of security domains. In an embodiment, a domain is a partition of a physical resource such as memory, disk storage device or network interface device where the partition contains data labeled according to a Biba label applied by a resource manager. In the example shown in Figure 1, there are two domains, domain A 114 with an integrity level of X1 within category Y1, and domain B 116 with an integrity level of X2 within category Y2. Various computing system components such as physical memory and devices 118 may be assigned to one of the domains. For example, devices 120 and 122 may be assigned to domain A, and devices 124 and 126 may be assigned to domain B. For example, memory pages designated at Biba label (X1 :Y1) contained in a direct memory access (DMA) buffer may be written to a disk storage device that has partitioned tracks according to a Biba labeling scheme where tracks 0-n correspond to the label (X1:Y1) and tracks (n+1)-m correspond to a label X2:Y2 and so forth. A virtualization technology table may also be created over DMA memory such that a virtualization technology lane corresponds to label (X1:Y2) and a second virtualization technology lane corresponds to another label X2:Y2 and so forth.

Figure 1 also includes a representation of flow management of attempted reads and writes between applications. An application 128 in domain A with a high level integrity may write down to App L1 104 if App L1's integrity level of X1 is less than or equal to high. An application in domain A may also read from App L1. App L1 may read from an application in domain A. App L1 104 may write down to App L2 106 since App L2's integrity level of X2 is less than or equal to App L1's integrity level of X1. App L1 may also read from App L2. App L2 may read from App L1. App L2 106 may write down to App L3 108 since App L3's integrity level of X3 is less than or equal to App L2's integrity level of X2. App L2 may also read from App L3. App L3 may read from App L2. App L3 108 may write down to an application in domain B 130 since an application in domain B's integrity level of low is less than or equal to App L3's integrity level of X3. App L3 may also read from the application in domain B. The application in domain B may read from App L3.

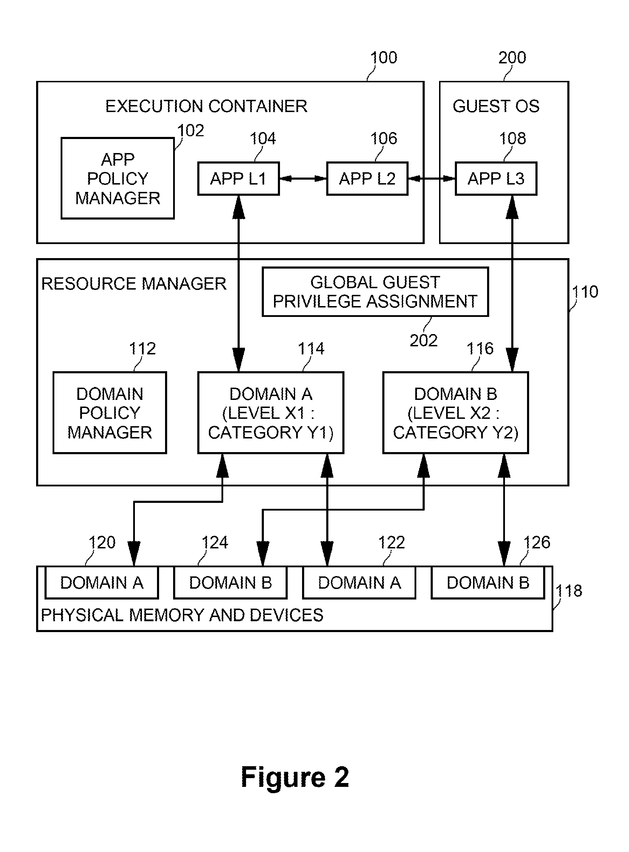

Figure 2 illustrates an execution container integrity model with a guest OS according to an embodiment of the present invention. A guest OS 200 that lacks a trusted Biba aware kernel can be assigned a global Biba privilege by the RM 110. The privilege is associated when the guest OS is initialized. Subsequent accesses to hardware are monitored by RM microcode. Consequently, devices and memory resources that are shared with applications running in the Execution Container do not pose an increased threat due to policy impedance miss-match. Yet guest OS applications (such as App L3 108 in this example) can continue to function normally without needing to be aware of the Biba security model constraints to devices and system resources, except where such access represents a threat to system integrity. In an embodiment, the RM includes a Global Guest Privilege Assignment component 202 to apply the Biba model to guest OS accesses. For example, if a Biba aware Execution Container 100 consisting of a CPU hyper-thread has two applications L1 104 and L2 106 that are assigned Biba labels (X1:Y1) and (X2:Y2) respectively, and given a third application L3 108 in a guest OS 200 (running in a second CPU hyper-thread) that is not Biba aware may need to use resources allocated by a Resource Manager. A global guest privileges assignment is made that creates a default mapping for resources assigned to the Guest OS such that a Biba label dominance calculation by the Resource Manager will produce a non-ambiguous result; and where a guest OS that is not Biba-aware will not become confused by resources that have been given Biba labels when accessed by the guest OS.

New techniques to protect memory pages in a guest OS that may include an AV scan agent may "harden" those pages against possible attack by malware in the guest OS. By staging such memory page protection configuration and runtime software using protected execution environments, the protected components in the guest OS can operate at an elevated security level whose security policy is consistent with regard to the system wide policy.

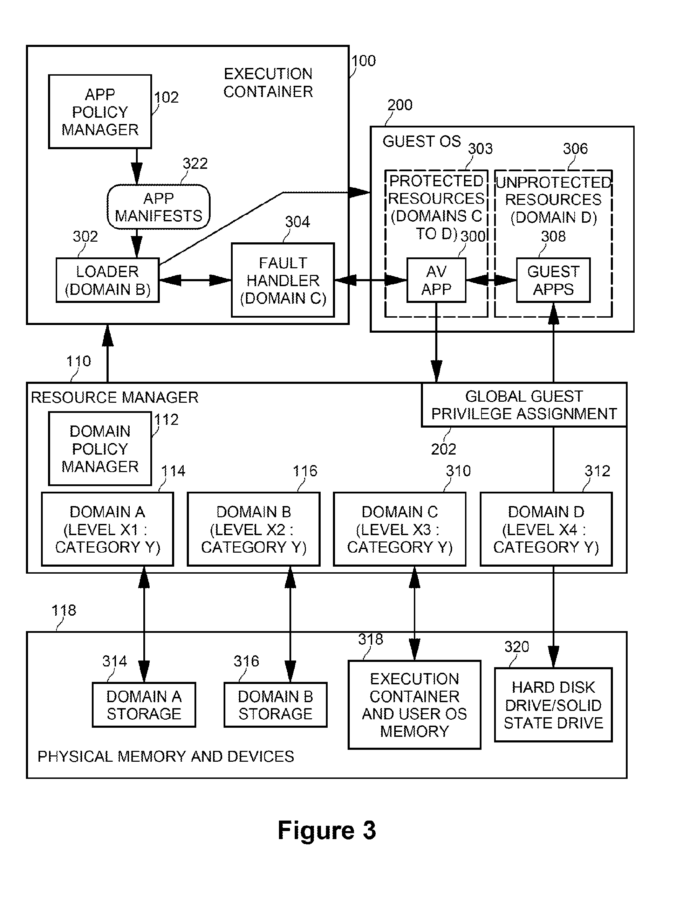

Figure 3 is a diagram of an execution container integrity model with a guest OS having an AV application according to an embodiment of the present invention. In an embodiment, a series of domains may be established by the computing system to enable protecting the integrity of the AV scan agents. In an embodiment, a set of domains may be created for the guest OS memory that is being monitored for changes. Some domains may comprise protected resources 303 within Guest OS 200. At least one domain may comprise unprotected resources 306 within Guest OS 200. In an embodiment, domains may be associated with micro-op (uop) threads in the processor.

Domain A 114: Highest Integrity level (SYS_HI). This domain may be established by the computing system and has the highest integrity level. It consists of the computing hardware (registers, memory), the RM 110 and RM controlled devices, and an Application Policy Manager 102 that can accept a manifest and a region of memory and verify that the region of memory matches the manifest and the validity of the signature based on a root of trust stored within the Application Policy Manager.

Domain B 116: (Domain B < Domain A). Domain B contains the protected execution environment 100 applications that are running to support AV scan agent protection mechanisms. These applications may be verified by the RM 110 along with other programs running in the Execution Container 100. Components include a runtime / light-weight OS (not shown), a Loader 302, a Fault Handler 304, an App Manifest 322 and an App Policy Manager 102 that provides services to the Domain C AV application 300, and is responsible for validating the Domain C AV application 300 and installing the AV application into the Execution Container 100.

Domain C 310: (Domain C < Domain B). This is the domain in which the AV application will execute. The AV application in Domain C has a lower integrity level than the Execution Container 100 applications but is elevated above the rest of the computing system because the integrity of the applications in this domain may be verified by digital signatures and the Application Policy Manager 102 in Domain A. In an embodiment, there may be at least two applications in this domain, a Fault Handler 304 running in Execution Container 100 and AV application 300 running in the in the user (Guest) OS 200 in protected pages. The AV application may have guest OS-specific knowledge but may need to be protected by a Biba mode higher than Domain D.

Domains C-1, C-2,... C-n: (Domain C-i < Domain C-j, if i> j. Domain C-2 < Domain C-1 < Domain C). The applications of Domain C (AV application 300 and Fault Handler 304) will create a series of fine-grained domains below Domain C. They will place memory in the guest OS into these domains as write traps are placed around those memory regions. These domains have a lower integrity level than Domain C in that the value within the memory region is not known to be free of malware, but it is known to have not changed since the trap was set. This contrasts to Domain C where the software included is signed by a manifest showing that the software has not changed since the software was created. It also contrasts with Domain D (discussed below, i.e., the Guest OS environment) in that within Domain D, memory can be changed at any time. In an embodiment, a series of these domains may be used so that the AV application may to distinguish between different levels of integrity in the protected items. For example, the value in the Global Descriptor Table Register (GDTR) of the processor can be known with high assurance since the GDTR is stored in Domain A hardware, while the value of a linear to physical memory mapping may depend on values stored in previously established domains C-i. Therefore, the value cannot be established with the same integrity level as domain C-i and must therefore have its own domain C-(i+1).

Domain D 312: (Domain D < Domain C-n < Domain-C). In an embodiment, Domain D may be a global domain assigned to all unprotected resources 306 accessible by Guest Applications 308. This includes Guest Ring-0 applications and kernel. It also includes all Ring-3 application software. Guest OS storage resources are allocated from a partition of a physical storage device where the partition 320 consists of tracks t0 - tn in Domain D with label (X4:Y).

An AV application (300) contained in protected guest OS memory pages 303 has memory page traps that when de-referenced will cause the Fault Handler 304 to consult a Biba MAC policy whereby the default guest OS Biba label may be overridden with a label that dominates the default label including Domain C. These memory pages are generally represented by 318.

Physical resources consumed by the Execution Container 100 are allocated from pools of memory and storage resources 314 and 316. Execution Container 100 has exclusive access to these resources enforced by label separation and by partitioning. The application manifest 322 may be stored in execution container storage 314 having a label assignment consistent with Domain A 114.

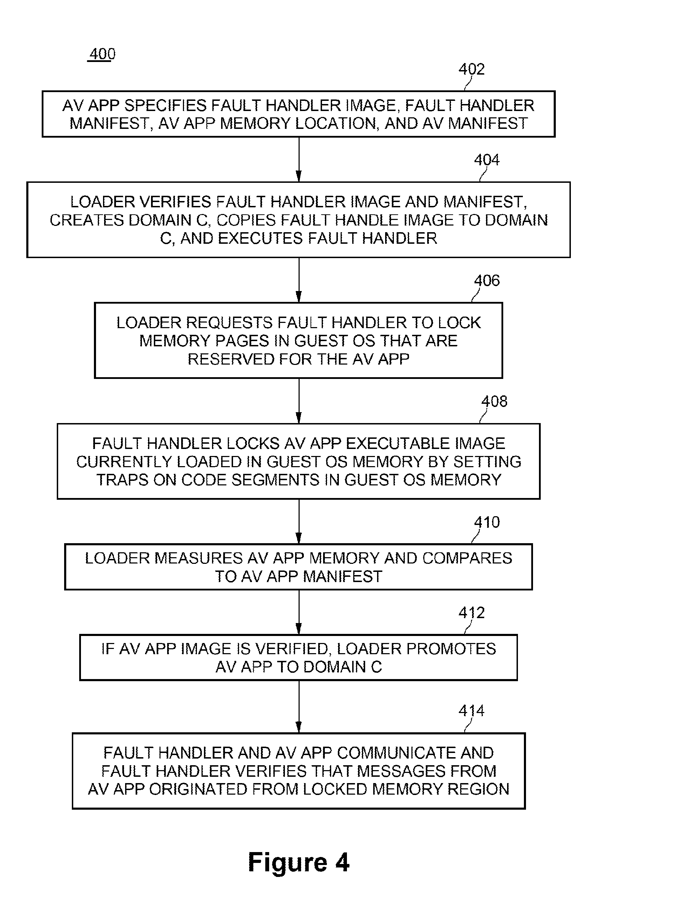

Figure 4 is a flow diagram 400 for establishing a C domain according to an embodiment of the present invention. At block 402, AV Application component 300 uses processor instructions to specify the code image of Fault Handler component 304, the manifest for the Fault Handler, the memory location of the AV Application, and the AV Application manifest 322. At block 404, Loader component 302 verifies the application manifest 322 and code image of the Fault Handler 304 with the Application Policy Manager 102. If the application manifest and Fault Handler are successfully verified, processing continues. The Loader creates Domain C 310, copies the Fault Handler code image into the memory associated with Domain C, and initiates execution of the Fault Handler code by the processor. At block 406, the Loader 302 requests that the Fault Handler 304 lock the memory pages in the Guest OS 200 that are reserved for the AV Application 300. At block 408, the Fault Handler locks the AV Application 300 executable code image currently loaded in the guest memory by setting traps on selected code segments in guest OS memory 318. Initially the guest OS protected pages are at Domain D. At block 410, the Loader measures the AV Application memory and compares it to the AV Application manifest 322. If an attacker in the Guest OS had earlier spoofed the Fault Handler by supplying incorrect page addresses, the integrity check should fail. Therefore, the Loader is not depending on the page tables in Domain D to perform an integrity check, but rather on the manifest that is validated by the Application Policy Manager 102 running in Domain A.

At block 412, once the Loader verifies the integrity of the AV Application image and has set up the conditions so that other Guest OS applications (or even Guest OS kernel code) can't modify the image without triggering page traps (detectable by the Fault Handler), the Loader promotes the AV Application to Domain C. In an embodiment, now that the Fault Handler 304 and the AV Application 300 are in the same domain, they can communicate via the processor hardware-implemented SendMessage command. At block 414, the Fault Handler verifies that every message received from the AV Application originates from within the memory region defined and locked above. Both code segments and data segments are included in Domain C. The code segments for the message are locked and placed into Domain C with the code segment of the Fault Handler, and the AV Application may be permitted to have access to those pages.

At this point, Domain C has been established, consisting of the Fault Handler running in the Execution Container 100 and the AV Application 300 running in the Guest OS 200. Both of these components have been verified by manifests and memory traps retain the integrity of the software images. The AV Application may now run to scan for malware.

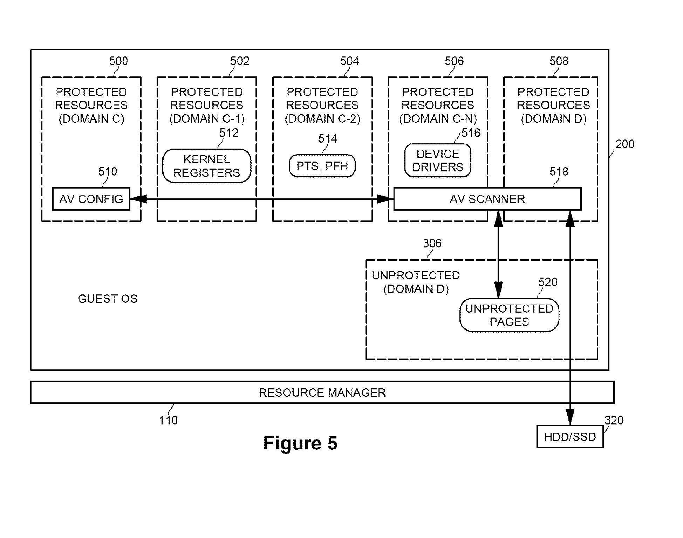

Figure 5 is a diagram illustrating cascading Biba security levels corresponding to a sequence of resource trapping mechanisms according to an embodiment of the present invention. Setting the initial kernel traps comprises establishing or altering Domain C-1, C-2, etc. Putting resources into different domains improves the overall security of the system. Figure 5 illustrates additional details of block 408 of Figure 4. Guest OS 200 may comprise a protected resources area for Domain C 500, which in an embodiment includes AV configuration program 510. Guest OS may also include an unprotected resources area 306 for Domain D, which in an embodiment may contain unprotected pages 520, as well as protected resources area 508 for Domain D. Domain C-1 502 has the highest integrity level of any of the sub-C domains. It is not validated by a manifest signed by an external authority and hence, its contents cannot be guaranteed to be malware free. The assertion that will be made about the sub-C domains is that from the point that the trap is set, no unauthorized software has altered the value (but there is no guarantee that unauthorized software has not altered the information prior to setting the trap).

In an embodiment, Domain C-1 502 may be established first and consists of all kernel elements that are in registers 512 to be protected. Domain C-2 504 may then be established by using the elements of Domain C-1 to obtain the correct addresses. Domain C-1 will contain the registers 514 of the system that must be monitored for unauthorized changes (SYSENTER MSR, CR3, etc.) and Domain C-2 will consist of the address translation page tables (PTs) and page fault handlers (PFHs) 514. Once these domains are established, further C-i domains may be created (such as Domain C-N 506) that rely on the integrity of Domains C-1 and C-2. Further domain n's may contain device drivers 516 and applications whose pages are protected using page fault traps 9such as AV Scanner 518).

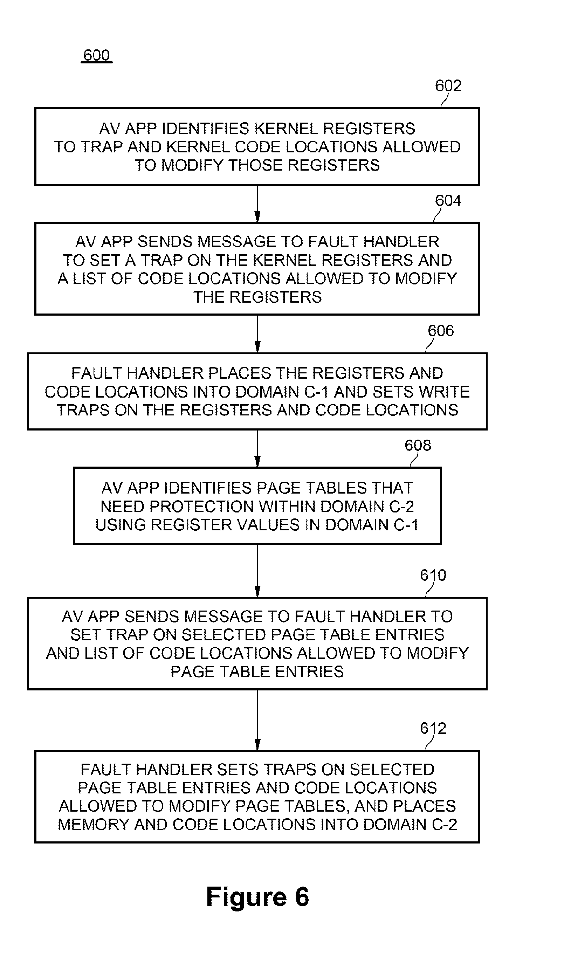

Figure 6 is a flow diagram 600 illustrating establishing sub-C domains according to an embodiment of the present invention. At block 602, the AV Application 300 identifies the kernel registers 512 to trap and the code locations within the kernel that are allowed to modify those registers - such as the scheduling software that is allowed to change the value of CR3 for the Guest OS 200 context. At block 604, the AV Application sends a message to Fault Handler 304 to set a trap on the selected registers and a list of the code locations that are allowed to make modifications to the registers. At block 606, the Fault Handler places the registers and the code locations into Domain C-1 502 and sets write traps on the registers and the authorized code locations. At this point, all unauthorized accesses to the registers will generate a trap within the protected execution environment system and will generate a Biba violation in that it will be a write from Domain D 306 into Domain C-1 502. At block 608, the AV Application uses the values of the registers in Domain C-1 to identify the page tables 514 of the system that need protection within Domain C-2 504. At block 610, the AV Application sends a message to the Fault Handler to set a trap on the selected page table entries and includes a list of the locations that are allowed to make modifications to those locations (such as the page fault handler). At block 612, the Fault Handler sets the traps on the selected page table entries, on those code locations that are authorized to modify the page table, and places the memory and code locations into Domain C-2 504. At this point, all unauthorized accesses to the page table will generate a trap within the protected execution environment system and will generate a Biba violation in that it will be a write from Domain D 306 into Domain C-2 504. All authorized operations will be a write from Domain C-2 504 into Domain C-2 or from Domain C-2 to Domain D 306. At this point, the core system (kernel) registers and the page tables have been protected. This allows the system to build more complex traps on those core elements.

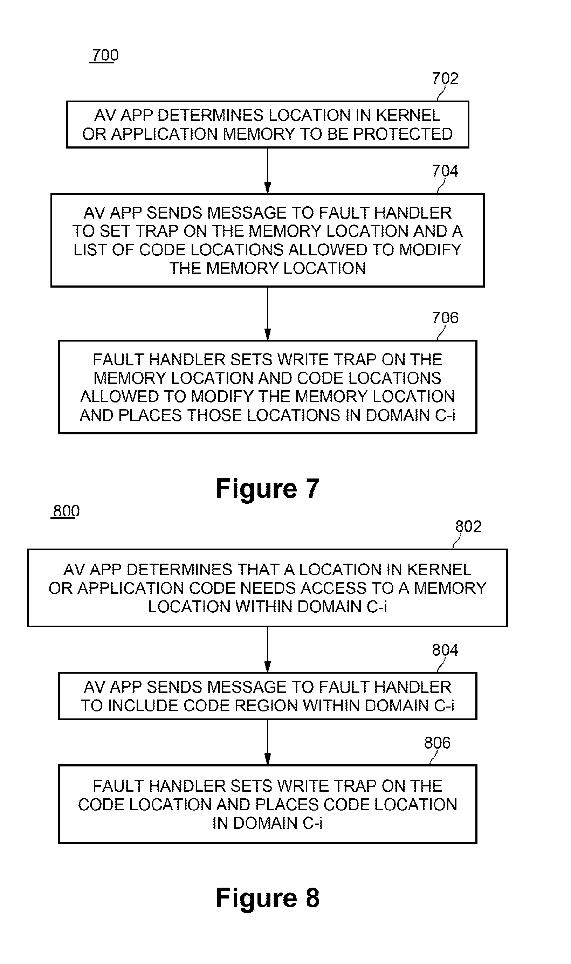

Figure 7 is a flow diagram 700 illustrating setting an application trap according to an embodiment of the present invention. Figure 7 provides further details on an embodiment of block 604 of Figure 6 for establishing or altering Domain C-i. This occurs whenever the AV Application determines that a region of kernel or user memory must be protected, or when the system state changes such that a region of code that did not have access to a particular memory region now needs access to that region. At block 702, the AV Application 300 determines a location in kernel or application memory that needs to be protected. The AV Application reads guest OS hardware registers 512 and page tables 514 to calculate the location of the trap. These values reside in Domain C-1 502 or Domain C-2 504. At block 704, the AV Application sends a message to the Fault Handler 304 to set a trap on the required memory location and a list of the code locations that are allowed to make modifications to those memory locations. At block 706, the Fault Handler sets a write trap on the memory location and on all code locations that are authorized to modify the memory location. The Fault Handler then places those elements into Domain C-i, wherein i is determined as j-1, wherein j is the highest domain level used for the computation of the addresses and locations of the trap. All unauthorized accesses from an unprotected region will generate a Biba violation in that it will be a write from Domain D 306 into Domain C-i. However, writes within the domain C-i will need to be distinguished if there are multiple regions within the domain (a write from a location authorized to write to one memory region must not be allowed to all regions of the domain).

Figure 8 is a flow diagram 800 illustrating setting an application trap according to another embodiment of the present invention. This process may be used as an alternate flow for Figure 7. At block 802, the AV Application determines that a location in kernel or application code needs access to a memory location that is within Domain C-i. This may be due to the installation of a new driver or other software. At block 804, the AV Application sends a message to the Fault Handler to include the code region within Domain C-i. At block 806, the Fault Handler sets a write trap on the code location and places the code location into Domain C-i.

So far, the AV Application has been presented as a single entity within the protected execution environment system, but in an embodiment the AV Application may consist of a plurality of parts and those parts may reside in different domains within the system. For example, in an embodiment, the AV Application may consist of two components: an AV Configuration (Config) Application 510 that sets traps on Guest OS objects, and an AV Scanner Application 518 that reads unprotected pages and files looking for malware infections. With this split model, the AV Configuration component may be elevated to Domain C 500, but the AV Scanner 518 may remain at a lower domain. In one embodiment, the AV Scanner may be placed into the lowest of the sub-C domains, Domain C-n 506, and the AV Scanner depends on the integrity of all of the higher domains, but it is isolated from attack from Domain D 306 malware because any write into the AV Scanner by Domain D malware will generate a Biba fault.

When Biba is used in the "ring" mode, the AV Scanner 518 is permitted to read Domain D objects while operating at Domain C-n 506. If an infected object is detected, the AV Scanner may spawn a sub-process at Domain D to delete or quarantine the affected object. The AV Scanner is never threatened by the offending malware because the AV Scanner can't run at Domain C-n. The AV Scanner may assign a new label to the hard disk drive (HDD) or solid state drive (SSD) 320 or memory pages that successfully pass AV scans. The new label is a domain greater than D and less than Domain C-n. The Resource Manager (RM) 110 verifies that the AV Scanner is trusted (e.g. page trap protections are in place) to perform the label change on scanned objects by verifying that the label change request originated from AV Scanner pages while page traps were activated and the AV Scanner label was at Domain C-n or higher.

When Biba is used in the "low-watermark" mode, the AV Scanner automatically switches the label to Domain D to perform the scan. If infected objects are detected, the scanner may remove or quarantine immediately, but may not change the label of clean objects. The AV Scanner may however change its label to Domain C-n as described, by asserting that the AV Scanner meets the requirements of the Domain C-n which is that traps have been placed on all critical code and data regions and that these traps have been in place while it was operating in Domain D. AV Scanner 518 is protected from Domain D malware due to resource traps only; there is no Biba restriction imposed. When Biba is used in the "strict" mode, the AV Scanner must request a label change to Domain D prior to performing object scans and to quarantine. Then, when completed, the AV Scanner must request a label change back to Domain C-n to re-label clean objects.

In an embodiment, placing the AV Scanner into Domain C-n may be accomplished as follows. The AV Configuration Application 510 determines the locations within the AV Scanner Application 518 that need protection. The AV Configuration Application signals the Fault Handler 304 to place traps on the appropriate AV Scanner Applications locations. The Fault Handler sets the appropriate trap, and places the locations into Domain C-n 506, since Domain C-n depends on all other sub-C domains.

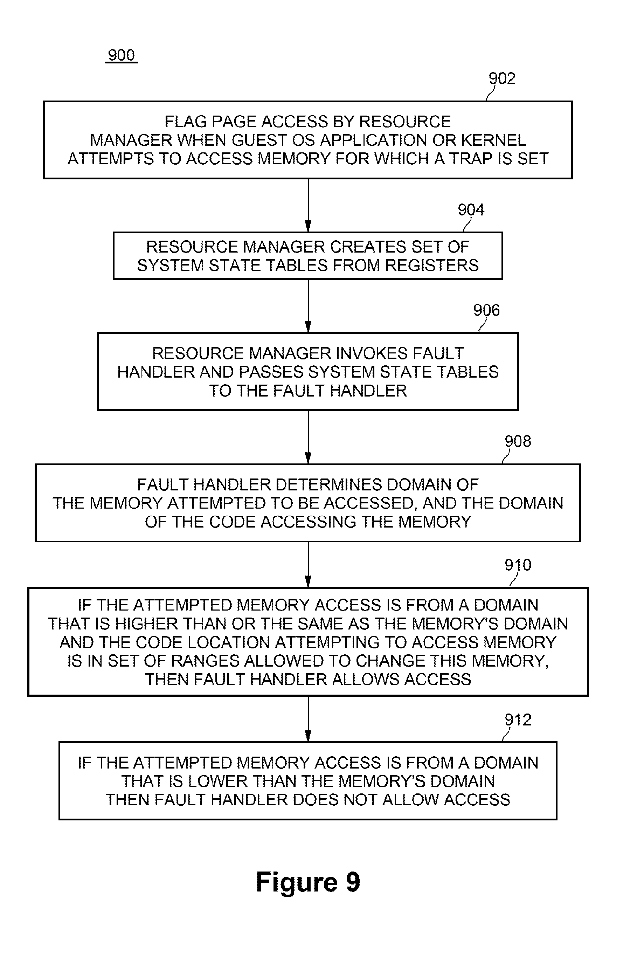

Figure 9 is a flow diagram 900 illustrating executing a trap according to an embodiment of the present invention. At some point, a write will occur to a trapped location. This will generate a fault (either through the AV Scanner mechanism or through a Biba violation of a write from a lower integrity domain into a higher integrity one.) At block 902, if a Guest OS 200 application or kernel writes to memory for which there is a trap set, the page access is flagged by the RM 110 and the Fault Handler 304 is invoked. At block 904, the RM creates a set of system state tables from the registers. At block 906, the RM invokes the Fault Handler and passes the system state tables to the Fault Handler. The state tables are trusted to be correctly constructed. At block 908, the Fault Handler determines the domain of the memory attempted to be accessed, and the domain of the code that is accessing memory. At block 910, if the attempted memory access is from a domain that is higher or the same as the memory's domain, and the code location that is attempting to access memory is listed in the set of ranges that are allowed to change this memory location, then the Fault Handler allows the operation. At block 912, if the attempted memory access is from a domain that is lower than the memory's domain, then the Fault Handler does not allow the access to change the memory.

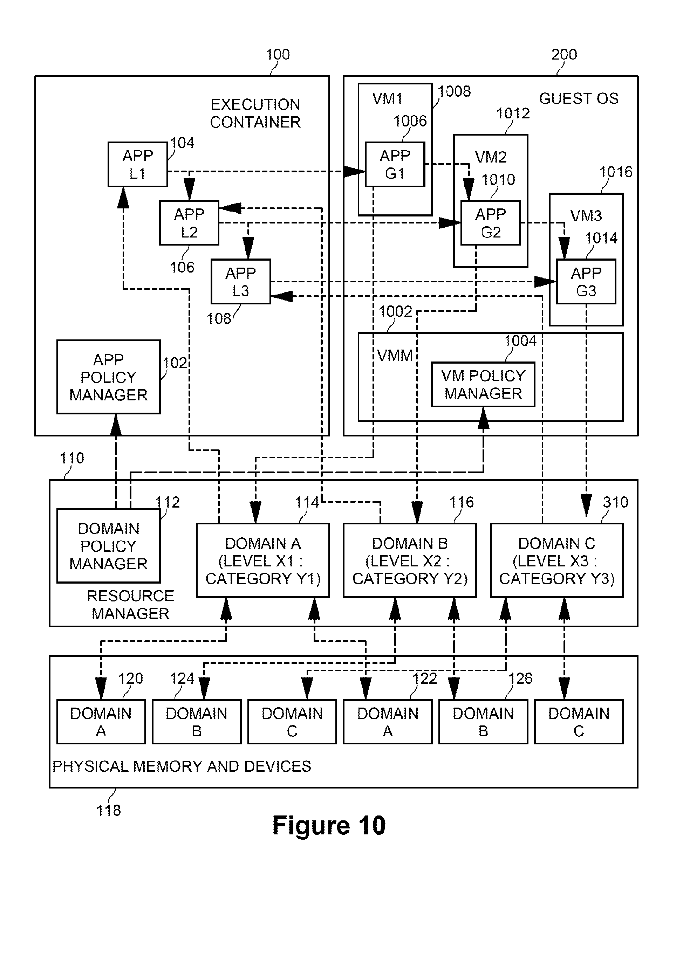

Figure 10 is a diagram of an execution container integrity model with a Guest OS as applied to a virtual machine manager (VMM) 1002 according to another embodiment of the present invention. A VMM may be used as is commonly known in the art of virtualization technology. In an embodiment, a VMM can enforce a commonly understood Biba security policy. The RM 110 operates at a higher integrity level than the VMM such that any attempt on behalf of the VMM to modify or subvert the RM constitutes a violation of the security policy. The RM can establish trust in the VMM as part of VMM load and can verify that the launch control policy that asserts VMM capabilities includes the ability to enforce Biba security rules. The Domain Policy Manager 112 in the RM assigns a range of Biba labels (i.e. privileges) to the VM Policy Manager 1004 within the VMM. The VMM enforces Biba rules according to the range supplied. The VM Policy Manager in the VMM then assigns privileges to VM containers from within that range. This ensures semantic consistency of Biba levels system wide, even though the VMM may not have a global view of all computing platform resources.

For example, if an application program such as App L1 104 in the Execution Container 100 is assigned a privilege Domain A 114 and an application such as App G1 1006 running in a Guest VM 1 1008 is assigned a privilege Domain A 114, both applications will operate using like privileges. Furthermore, if App L1 104 downgraded information for consumption by App L2 106, then App L2 could communicate that information to App G2 1010 running in Guest VM 2 1012 in the Guest OS 200 environment without violating the system wide security policy. Similarly, the App G2 1010 could downgrade information and share it with App G3 1014 running in Guest VM 3 1016 and having Domain C 310, and/or App L3 108 without violating a security policy.

Having a commonly understood security policy model allows flexible interaction between system components, while still ensuring that the security objectives of the system are maintained. If the Guest OS environment is determined to have a maximum level of trustworthiness that is lower than the protected execution environment, then the RM would reserve privilege levels at the top of the range that are not assigned to the VMM environment. If the VMM became corrupted and assigned privileges that are outside of its assigned range, the RM can perform a range check on memory and device accesses to detect cheating. If the VMM environment was launched using secure launch technology (e.g., trusted execution technology (TXT)), then the RM may trust the VMM to enforce range checks on VM pages. This may have beneficial performance implications.

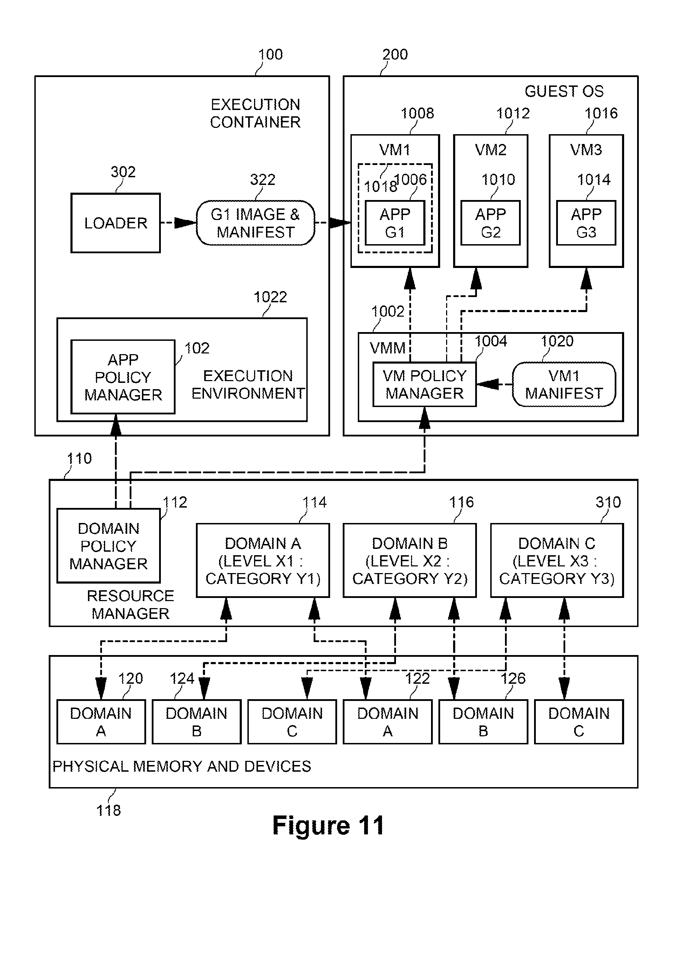

Use of a protected execution environment may be combined with virtualization while maintaining Biba security policy consistency system wide. Figure 11 is a diagram of an execution container integrity model with a Guest OS 200 as applied to a VMM 1002, wherein a virtual machine includes an AV application according to an embodiment of the present invention. The protected execution environment may be used to enforce domain boundaries on higher privileged apps in VM 1 1008. VM1 is trusted by VMM with the same privilege level (e.g., Domain 0 is a VM that acts on behalf of the VMM). However, if the VM becomes compromised, the VM could subvert the VMM behavior.

Figure 11 shows an execution environment 1022 being used to populate an application (App G1 1006) in VM 1 1008 that is protected using memory sandboxing techniques. The VMM enforces Biba privileges over the VMs using commonly understood policy syntax and semantics directed by the Domain Policy Manager 112 of the RM 110. Additional page protections may be applied to App G1 1006 in VM1 1008. The Application Policy Manager 102 may be assigned Biba polices such the Biba labels assigned to App G1 1006 are within the label range the VMM Policy Manager 1004 assigned to VM 1 1008.

In the case of a guest OS in a VM 1008 that is not Biba aware, application 1006 pages 1018 can be registered to generate VMExit traps by a VMM 1002 such that a VM manifest 1020 contains a policy for constructing VMExit traps and a Biba label assignment that overrides the default label assigned by a Biba aware VMM 1002.

In the case of a guest OS in a Biba-aware VMs 1012 & 1016, the VM allocates memory pages according to the label assignments made by the VM.

Embodiments of the present invention provide a protected execution environment by implementing a mandatory integrity policy enforced by microcode of the processor. The integrity rules are formally specified (e.g. Biba) making validation and security evaluation simpler. Enforcement in processor hardware (microcode) ensures that a compromised OS cannot easily undermine the security policy. Embodiments of the present invention may be applied in both virtualized and non-virtualized environments and in any operating system environment.

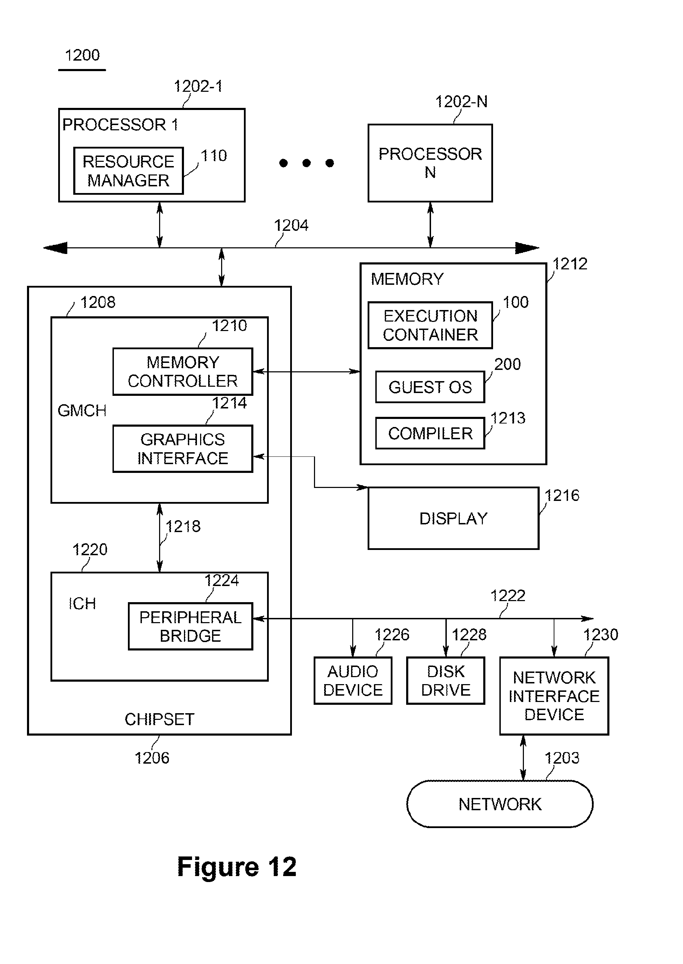

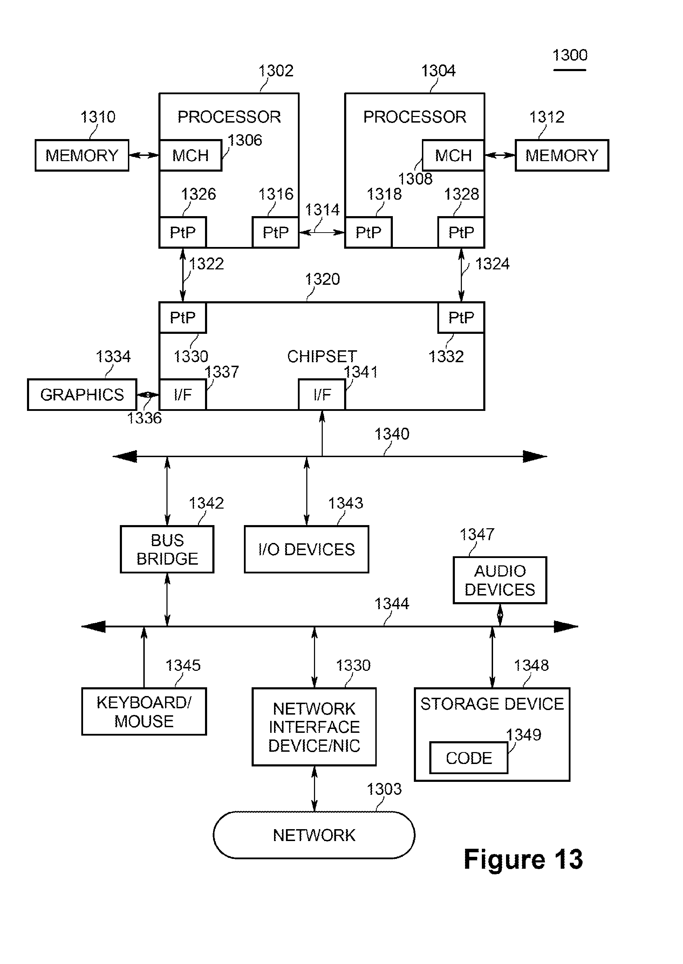

Figure 12 illustrates a block diagram of an embodiment of a computing system 1200. In various embodiments, one or more of the components of the system 1200 may be provided in various electronic devices capable of performing one or more of the operations discussed herein with reference to some embodiments of the invention. For example, one or more of the components of the system 1200 may be used to perform the operations discussed with reference to Figures 1-11, e.g., by processing instructions, executing subroutines, etc. in accordance with the operations discussed herein. Also, various storage devices discussed herein (e.g., with reference to Figure 12 and/or Figure 13) may be used to store data, operation results, etc. In one embodiment, data received over the network 1203 (e.g., via network interface devices 1230 and/or 1330) may be stored in caches (e.g., L1 caches in an embodiment) present in processors 1202 (and/or 1302 of Figure 13). These processors may then apply the operations discussed herein in accordance with various embodiments of the invention.

More particularly, the computing system 1200 may include one or more central processing unit(s) (CPUs) 1202 or processors that communicate via an interconnection network (or bus) 1204. Hence, various operations discussed herein may be performed by a processor in some embodiments. Moreover, the processors 1202 may include a general purpose processor, a network processor (that processes data communicated over a computer network 1203, or other types of a processor (including a reduced instruction set computer (RISC) processor or a complex instruction set computer (CISC)). Moreover, the processors 1202 may have a single or multiple core design. The processors 1202 with a multiple core design may integrate different types of processor cores on the same integrated circuit (IC) die. Also, the processors 1202 with a multiple core design may be implemented as symmetrical or asymmetrical multiprocessors. Moreover, the operations discussed with reference to Figures 1-11 may be performed by one or more components of the system 1200. In an embodiment, a processor (such as processor 1 1202-1) may comprise Resource Manager (RM) 110 as hardwired logic (e.g., circuitry) or microcode.

A chipset 1206 may also communicate with the interconnection network 1204. The chipset 1206 may include a graphics and memory control hub (GMCH) 1208. The GMCH 1208 may include a memory controller 1210 that communicates with a memory 1212. The memory 1212 may store data, including sequences of instructions that are executed by the processor 1202, or any other device included in the computing system 1200. Furthermore, memory 1212 may store one or more of the programs or algorithms discussed herein such as Execution Container 100, Guest OS 200, a compiler 1213, instructions corresponding to executables, mappings, etc. Same or at least a portion of this data (including instructions) may be stored in disk drive 1228 and/or one or more caches within processors 1202. In one embodiment of the invention, the memory 1212 may include one or more volatile storage (or memory) devices such as random access memory (RAM), dynamic RAM (DRAM), synchronous DRAM (SDRAM), static RAM (SRAM), or other types of storage devices. Nonvolatile memory may also be utilized such as a hard disk. Additional devices may communicate via the interconnection network 1204, such as multiple processors and/or multiple system memories.

The GMCH 1208 may also include a graphics interface 1214 that communicates with a display 1216. In one embodiment of the invention, the graphics interface 1214 may communicate with the display 1216 via an accelerated graphics port (AGP). In an embodiment of the invention, the display 1216 may be a flat panel display that communicates with the graphics interface 1214 through, for example, a signal converter that translates a digital representation of an image stored in a storage device such as video memory or system memory into display signals that are interpreted and displayed by the display 1216. The display signals produced by the interface 1214 may pass through various control devices before being interpreted by and subsequently displayed on the display 1216.

A hub interface 1218 may allow the GMCH 1208 and an input/output (I/O) control hub (ICH) 1220 to communicate. The ICH 1220 may provide an interface to I/O devices that communicate with the computing system 1200. The ICH 1220 may communicate with a bus 1222 through a peripheral bridge (or controller) 1224, such as a peripheral component interconnect (PCI) bridge, a universal serial bus (USB) controller, or other types of peripheral bridges or controllers. The bridge 1224 may provide a data path between the processor 1202 and peripheral devices. Other types of topologies may be utilized. Also, multiple buses may communicate with the ICH 1220, e.g., through multiple bridges or controllers. Moreover, other peripherals in communication with the ICH 1220 may include, in various embodiments of the invention, integrated drive electronics (IDE) or small computer system interface (SCSI) hard drive(s), USB port(s), a keyboard, a mouse, parallel port(s), serial port(s), floppy disk drive(s), digital output support (e.g., digital video interface (DVI)), or other devices.

The bus 1222 may communicate with an audio device 1226, one or more disk drive(s) 1228, and a network interface device 1230, which may be in communication with the computer network 1203. In an embodiment, the device 1230 may be a network interface controller (NIC) capable of wired or wireless communication. Other devices may communicate via the bus 1222. Also, various components (such as the network interface device 1230) may communicate with the GMCH 1208 in some embodiments of the invention. In addition, the processor 1202, the GMCH 1208, and/or the graphics interface 1214 may be combined to form a single chip.

Furthermore, the computing system 1200 may include volatile and/or nonvolatile memory (or storage). For example, nonvolatile memory may include one or more of the following: read-only memory (ROM), programmable ROM (PROM), erasable PROM (EPROM), electrically EPROM (EEPROM), a disk drive (e.g., 1228), a floppy disk, a compact disk ROM (CD-ROM), a digital versatile disk (DVD), flash memory, a magneto-optical disk, or other types of nonvolatile machine-readable media that are capable of storing electronic data (e.g., including instructions).

In an embodiment, components of the system 1200 may be arranged in a point-to-point (PtP) configuration such as discussed with reference to Figure 13. For example, processors, memory, and/or input/output devices may be interconnected by a number of point-to-point interfaces.

More specifically, Figure 13 illustrates a computing system 1300 that is arranged in a point-to-point (PtP) configuration, according to an embodiment of the invention. In particular, Figure 13 shows a system where processors, memory, and input/output devices are interconnected by a number of point-to-point interfaces. The operations discussed with reference to Figures 1-12 may be performed by one or more components of the system 1300.

As illustrated in Figure 13, the system 1300 may include multiple processors, of which only two, processors 1302 and 1304 are shown for clarity. The processors 1302 and 604 may each include a local memory controller hub (MCH) 1306 and 1308 (which may be the same or similar to the GMCH 1208 of Figure 12 in some embodiments) to couple with memories 1310 and 1312. The memories 1310 and/or 1312 may store various data such as those discussed with reference to the memory 1212 of Figure 13.

The processors 1302 and 1304 may be any suitable processor such as those discussed with reference to the processors 1302 of Figure 13. The processors 1302 and 1304 may exchange data via a point-to-point (PtP) interface 1314 using PtP interface circuits 1316 and 1318, respectively. The processors 1302 and 1304 may each exchange data with a chipset 1320 via individual PtP interfaces 1322 and 1324 using point to point interface circuits 1326, 1328, 1330, and 1332. The chipset 1320 may also exchange data with a high-performance graphics circuit 1334 via a high-performance graphics interface 1336, using a PtP interface circuit 1337.

At least one embodiment of the invention may be provided by utilizing the processors 1302 and 1304. For example, the processors 1302 and/or 1304 may perform one or more of the operations of Figures 1-11. Other embodiments of the invention, however, may exist in other circuits, logic units, or devices within the system 1300 of Figure 13. Furthermore, other embodiments of the invention may be distributed throughout several circuits, logic units, or devices illustrated in Figure 13.

The chipset 1320 may be coupled to a bus 1340 using a PtP interface circuit 1341. The bus 1340 may have one or more devices coupled to it, such as a bus bridge 1342 and I/O devices 1343. Via a bus 1344, the bus bridge 1343 may be coupled to other devices such as a keyboard/mouse 1345, the network interface device 1330 discussed with reference to Figure 12 (such as modems, network interface cards (NICs), or the like that may be coupled to the computer network 1303), audio I/O device 1347, and/or a data storage device 1348. The data storage device 1348 may store code 1349 that may be executed by the processors 1302 and/or 1304.

In various embodiments of the invention, the operations discussed herein, e.g., with reference to Figures 1-13, may be implemented as hardware (e.g., logic circuitry), software (including, for example, micro-code that controls the operations of a processor such as the processors discussed with reference to Figures 12-13), firmware, or combinations thereof, which may be provided as a computer program product, e.g., including a tangible machine-readable or computer-readable medium having stored thereon instructions (or software procedures) used to program a computer (e.g., a processor or other logic of a computing device) to perform an operation discussed herein. The machine-readable medium may include a storage device such as those discussed herein.

Reference in the specification to "one embodiment" or "an embodiment" means that a particular feature, structure, or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments of the invention, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Additionally, such computer-readable media may be downloaded as a computer program product, wherein the program may be transferred from a remote computer (e.g., a server) to a requesting computer (e.g., a client) by way of data signals, via a communication link (e.g., a bus, a modem, or a network connection).

Thus, although embodiments of the invention have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. In a computing system having a loader (302), a fault handler (304) and an application policy manager (102) in an execution container (100) and a resource manager (110) for verifying the loader (302) and controlling access to security domains, the resource manager (110) operating at higher security level than the loader (302) and the loader (302) belonging to a higher security level than the fault handler (304) and an antivirus (AV) application (300) contained in protected pages of a guest OS (200) installed in addition to a host operating system, a method comprising:
specifying, by the AV application, a fault handler code image, a fault handler manifest, a memory location of the AV application (300), and an AV application manifest by way of processor instructions to the loader (302);
verifying, by the loader (302), the fault handler code image and the fault handler manifest with the application policy manager (102);
creating, by the loader (302), a first security domain having a first security level, copying the fault handler code image to memory associated with the first security domain, and initiating execution of the fault handler (304);
requesting, by the loader (302), to lock memory pages in the guest OS (200) that are reserved for the AV application (300);
locking, by the fault handler (304), the executable code image of the AV application (300) by setting traps on selected code segments in guest OS memory pages;
measuring, by the loader (302), AV application memory and comparing the measurement to the application manifest; and
promoting, by the loader (302), the AV application (300) from a second security domain with a second security level to the first security domain, when the AV application (300) is successfully verified by the measuring and comparing step, the first security level being higher than the second security level.

2. The method of claim 1, wherein the loader (302) and the fault handler (304) execute within a protected execution environment in the computing system.

3. The method of claim 1 , wherein other applications running in the guest OS (200) are in a second security domain having a second security level..

4. The method of claim 3, wherein an application running in the second security domain cannot modify memory in the first security domain without triggering traps detected by the fault handler (304) or
wherein guest OS kernel code running in the second security domain cannot modify memory in the first security domain without triggering traps detected by the fault handler (304).

5. The method of claim 1, further comprising executing the AV application (300) to scan for malware in the computing system, in particular
further comprising verifying, by the fault handler, that messages from the AV application originate from the locked guest OS memory.

6. The method of claim 1, wherein the AV application (300) executes within a virtual machine controlled by a virtual machine manager (VMM).

7. A computer-readable medium comprising one or more instructions that when executed on a processor of a computing system having a loader (302) and a fault handler (304) configure the processor to perform a method according to any one of the claims I to 6.

8. A computing system comprising:
a processor to execute instructions to enforce a security policy for the computing system;
an execution container (100) including a loader (302) ,a fault handler and an application policy manager (102);
resource manager logic included in the processor to verify the loader (302) and to control access to a plurality of security domains;
a guest operating system (OS) (200) installed in addition to a host operating system and including an antivirus (AV) application (300), contained in protected pages of the guest OS (200);
the resource manager logic operating at higher security level than the loader (302) and the loader (302) belonging to a higher security level than the fault handler (304) and the AV application (300);
wherein the AV application (300) is to specify a fault handler code image, a fault handler manifest, a memory location of the AV application, and an AV application manifest;
wherein the loader (302) is to verify the fault handler code image and the fault handler manifest, to create a first security domain having a first security level, copy the fault handler code image to memory associated with the first security domain, initiate execution of the fault handler (304) by the processor, and request to lock memory pages in the guest OS (200) that are reserved for the AV application (300); wherein
the fault handler (304) is to lock the executable code image of the AV application (300) by setting traps on selected code segments in guest OS memory pages; and wherein the loader (302) is to measure AV application memory, to compare the measurement to the AV application manifest, and to promote the AV application from a second domain with a second security level to the first security domain, when the AV application (300) is successfully verified by the measuring and comparing step, the first security level being higher than the second security level.

9. The computing system of claim 9, wherein other applications running in the guest OS (200) are in a second security domain having a second security level.

10. The computing system of claim 10, wherein an application running in the second security domain cannot modify memory in the first security domain without triggering traps detected by the fault handler (304).

11. The computing system of claim 10, wherein guest OS kernel code running in the second security domain cannot modify memory in the first security domain without triggering traps detected by the fault handler (304).

12. The computing system of claim 9, further comprising executing the AV application (300) to scan for malware in the computing system, in particular wherein the fault handler (304) is to verify that messages from the AV application (300)originate from the locked guest OS memory.

13. The computing system of claim 9, further comprising a virtual machine manager (VMM) in the guest OS (200) to instantiate a virtual machine wherein the AV application (300) executes within the virtual machine.

14. The computing system of claim 9, wherein the execution container (100) comprises a protected execution environment.

## Patentansprüche

1. Computersystem, das einen Lader (302), eine Fehlerbehandlungsroutine (304) und einen Anwendungsrichtlinien-Manager (102) in einem Ausführungscontainer (100) und einen Ressourcenmanager (110) zum Überprüfen des Laders (302) und Steuern des Zugriffs auf Sicherheitsdomänen aufweist, wobei der Ressourcenmanager (110) auf einer höheren Sicherheitsebene arbeitet als der Lader (302) und der Lader (302) zu einer höheren Sicherheitsebene gehört als die Fehlerbehandlungsroutine (304) und eine Antivirus (AV)-Anwendung (300), die in geschützten Seiten eines Gast-OS (200) enthalten ist, das zusätzlich zu einem Hostbetriebssystem installiert ist, wobei ein Verfahren aufweist:
das Spezifizieren eines Fehlerbehandlungsroutinen-Codeabbilds, eines Fehlerbehandlungsroutinen-Manifests, einer Speicherstelle der AV-Anwendung (300) und eines AV-Anwendungsmanifests mittels Prozessorbefehlen an den Lader (302) durch die AV-Anwendung;
das Überprüfen des Fehlerbehandlungsroutinen-Codeabbilds und des Fehlerbehandlungsroutinen-Manifests mit dem Anwendungsrichtlinien-Manager (102) durch den Lader (302);
das Erstellen einer ersten Sicherheitsdomäne, die eine erste Sicherheitsebene aufweist, durch den Lader (302), das Kopierern des Fehlerbehandlungsroutinen-Codeabbilds in einen Speicher, der mit der ersten Sicherheitsdomäne verbunden ist, und das Initiieren der Ausführung der Fehlerbehandlungsroutine (304);
das Anfordern, Speicherseiten im Gast-OS (200) zu sperren, die für die AV-Anwendung (300) reserviert sind, durch den Lader (302);
das Sperren des ausführbaren Codeabbilds der AV-Anwendung (300) durch Setzen von Traps bei ausgewählten Codesegmenten in Gast-OS-Speicherseiten durch die Fehlerbehandlungsroutine (304);
das Messen des AV-Anwenderspeichers und Vergleichen der Messung mit dem Anwendungsmanifest durch den Lader (302); und
das Fördern der AV-Anwendung (300) von einer zweiten Sicherheitsdomäne mit einer zweiten Sicherheitsebene zu der ersten Sicherheitsdomäne durch den Lader (302), wenn die AV-Anwendung (300) erfolgreich durch den Mess- und Vergleichsschritt überprüft wurde, wobei die erste Sicherheitsebene höher ist als die zweite Sicherheitsebene.

2. Verfahren nach Anspruch 1, wobei der Lader (302) und die Fehlerbehandlungsroutine (304) innerhalb einer geschützten Ausführungsumgebung im Computersystem ausgeführt werden.

3. Verfahren nach Anspruch 1, wobei andere Anwendungen, die im Gast-OS (200) laufen, sich in einer zweiten Sicherheitsdomäne befinden, die eine zweiten Sicherheitsebene aufweist.

4. Verfahren nach Anspruch 3, wobei eine in der zweiten Sicherheitsdomäne laufende Anwendung Speicher in der ersten Sicherheitsdomäne nicht modifizieren kann, ohne Traps zu triggern, die durch die Fehlerbehandlungsroutine (304) erkannt werden, oder
wobei in der zweiten Sicherheitsdomäne laufender Gast-OS-Kerncode Speicher in der ersten Sicherheitsdomäne nicht modifizieren kann, ohne Traps zu triggern, die durch die Fehlerbehandlungsroutine (304) erkannt werden.

5. Verfahren nach Anspruch 1, ferner aufweisend das Ausführen der AV-Anwendung (300), um nach Malware im Computersystem zu scannen, und insbesondere
ferner aufweisend das Überprüfen durch die Fehlerbehandlungsroutine, dass Nachrichten aus der AV-Anwendung vom gesperrten Gast-OS-Speicher strammen.

6. Verfahren nach Anspruch 1, wobei die AV-Anwendung (300) innerhalb einer virtuellen Maschine ausgeführt wird, die durch einen Virtual Machine Manager (VMM) gesteuert wird.

7. Computerlesbares Medium, das einen oder mehrere Befehle aufweist, die bei Ausführung auf einem Prozessor eines Computersystems, das einen Lader (302) und eine Fehlerbehandlungsroutine (304) aufweist, den Prozessor konfigurieren, ein Verfahren nach irgendeinem der Ansprüche 1 bis 6 auszuführen.

8. Computersystem, aufweisend:
einen Prozessor, um Befehle auszuführen, um eine Sicherheitsrichtlinie für das Computersystem zu erzwingen;
einen Ausführungscontainer (100), der einen Lader (302), eine Fehlerbehandlungsroutine und einen Anwendungsrichtlinien-Manager (102) aufweist;
Ressourcenmanager-Logik, die im Prozessor beinhaltet ist, um den Lader (302) zu überprüfen und den Zugriff auf mehrere Sicherheitsdomänen zu steuern;
ein Gastbetriebssystem (OS) (200), das zusätzlich zu einem Hostbetriebssystem installiert ist und das eine Antivirus (AV)-Anwendung (300) aufweist, die in geschützten Seiten des Gast-OS (200) enthalten ist;
wobei die Ressourcenmanager-Logik auf einer höheren Sicherheitsebene arbeitet als der Lader (302) und der Lader (302) zu einer höheren Sicherheitsebene gehört als die Fehlerbehandlungsroutine (304) und die AV-Anwendung (300);
wobei die AV-Anwendung (300) ein Fehlerbehandlungsroutinen-Codeabbild, ein Fehlerbehandlungsroutinen-Manifest, eine Speicherstelle der AV-Anwendung und ein AV-Anwendungsmanifest spezifiziert;
wobei der Lader (302) das Fehlerbehandlungsroutinen-Codeabbild und das Fehlerbehandlungsroutinen-Manifest überprüft, um eine erste Sicherheitsdomäne zu erstellen, die eine erste Sicherheitsebene aufweist, das Fehlerbehandlungsroutinen-Codeabbild in den mit der ersten Sicherheitsdomäne verbundenen Speicher kopiert, die Ausführung der Fehlerbehandlungsroutine (304) durch den Prozessor initiiert und anfordert, Speicherseiten im Gast-OS (200) zu sperren, die für die AV-Anwendung (300) reserviert sind; wobei die Fehlerbehandlungsroutine (304) das ausführbare Codeabbild der AV-Anwendung (300) durch das Setzen von Traps bei ausgewählten Codesegmenten in Gast-OS-Speicherseiten sperrt; und
wobei der Lader (302) AV-Anwenderspeicher misst, um die Messung mit dem AV-Anwendungsmanifest zu vergleichen und die AV-Anwendung von einer zweiten Domäne mit einer zweiten Sicherheitsebene zu der ersten Sicherheitsdomäne zu fördern, wenn die AV-Anwendung (300) durch den Mess- und Vergleichsschritt erfolgreich überprüft wurde, wobei die erste Sicherheitsebene höher ist als die zweite Sicherheitsebene.

9. Verfahren nach Anspruch 9, wobei andere Anwendungen, die im Gast-OS (200) laufen, sich in einer zweiten Sicherheitsdomäne befinden, die eine zweite Sicherheitsebene aufweist.

10. Computersystem nach Anspruch 10, wobei eine in der zweiten Sicherheitsdomäne laufende Anwendung Speicher in der ersten Sicherheitsdomäne nicht modifizieren kann, ohne Traps zu triggern, die durch die Fehlerbehandlungsroutine (304) erkannt werden.

11. Computersystem nach Anspruch 10, wobei ein in der zweiten Sicherheitsdomäne laufender Gast-OS-Kerncode Speicher in der ersten Sicherheitsdomäne nicht modifizieren kann, ohne Traps zu triggern, die durch die Fehlerbehandlungsroutine (304) erkannt werden.

12. Computersystem nach Anspruch 9, ferner aufweisend das Ausführen der AV-Anwendung (300), um nach Malware im Computersystem zu scannen, wobei insbesondere
die Fehlerbehandlungsroutine (304) überprüft, dass Nachrichten von der AV-Anwendung (300) vom gesperrten Gast-OS-Speicher stammen.

13. Computersystem nach Anspruch 9, ferner aufweisend einen Virtual Machine Manager (VMM) im Gast-OS (200), um eine virtuelle Maschine zu instanziieren, wobei die AV-Anwendung (300) innerhalb der virtuellen Maschine ausgeführt wird.

14. Computersystem nach Anspruch 9, wobei der Ausführungscontainer (100) eine geschützte Ausführungsumgebung aufweist.

## Revendications

1. Dans un système informatique ayant un chargeur (302), un programme de traitement d'erreurs (304) et un gestionnaire de politiques d'application (102) dans un conteneur d'exécution (100) et un gestionnaire de ressources (110) permettant de vérifier le chargeur (302) et de contrôler l'accès à des domaines de sécurité, le gestionnaire de ressources (110) fonctionnant à un niveau de sécurité supérieur à celui du chargeur (302) et le chargeur (302) appartenant à un niveau de sécurité supérieur à celui du programme de traitement d'erreurs (304) et d'une application antivirus (AV) (300) contenue dans des pages protégées d'un OS invité (200) installé en plus d'un système d'exploitation hôte, un procédé comprenant les étapes suivantes :
spécifier, par l'application AV, une image de code de programme de traitement d'erreurs, un manifeste de programme de traitement d'erreurs, un emplacement mémoire de l'application AV (300), et un manifeste d'application AV au moyen d'instructions processeur envoyées au chargeur (302) ;
vérifier, par le chargeur (302), l'image de code de programme de traitement d'erreurs et le manifeste de programme de traitement d'erreurs avec le gestionnaire de politiques d'application (102) ;
créer, par le chargeur (302), un premier domaine de sécurité ayant un premier niveau de sécurité, copier l'image de code de programme de traitement d'erreurs dans la mémoire associée au premier domaine de sécurité, et lancer l'exécution du programme de traitement d'erreurs (304) ;
demander, par le chargeur (302), de verrouiller des pages mémoire dans l'OS invité (200) qui sont réservées pour l'application AV (300) ;
verrouiller, par le programme de traitement d'erreurs (304), l'image de code exécutable de l'application AV (300) en créant des déroutements sur des segments de code sélectionnés dans des pages mémoire de l'OS invité ;
mesurer, par le chargeur (302), une mémoire d'application AV et comparer la mesure au manifeste d'application ; et
élever, par le chargeur (302), l'application AV (300) depuis un deuxième domaine de sécurité avec un deuxième niveau de sécurité jusqu'au premier domaine de sécurité, lorsque l'application AV (300) est vérifiée avec succès par l'étape de mesure et de comparaison, le premier niveau de sécurité étant supérieur au deuxième niveau de sécurité.

2. Procédé selon la revendication 1, dans lequel le chargeur (302) et le programme de traitement d'erreurs (304) s'exécutent à l'intérieur d'un environnement d'exécution protégé dans le système informatique.

3. Procédé selon la revendication 1, dans lequel d'autres applications s'exécutant dans l'OS invité (200) sont dans un deuxième domaine de sécurité ayant un deuxième niveau de sécurité.

4. Procédé selon la revendication 3, dans lequel une application s'exécutant dans le deuxième domaine de sécurité ne peut pas modifier une mémoire dans le premier domaine de sécurité sans déclencher des déroutements détectés par le programme de traitement d'erreurs (304) ou
un code de noyau d'OS invité s'exécutant dans le deuxième domaine de sécurité ne peut pas modifier une mémoire dans le premier domaine de sécurité sans déclencher des déroutements détectés par le programme de traitement d'erreurs (304).

5. Procédé selon la revendication 1, consistant en outre à exécuter l'application AV (300) permettant de rechercher des programmes malveillants dans le système informatique, en particulier
consistant en outre à vérifier, par le programme de traitement d'erreurs, que des messages envoyés à partir de l'application AV proviennent de la mémoire verrouillée de l'OS invité.

6. Procédé selon la revendication 1, dans lequel l'application AV (300) s'exécute à l'intérieur d'une machine virtuelle commandée par un gestionnaire de machine virtuelle (VMM).

7. Support lisible par ordinateur comprenant une ou plusieurs instructions qui, lorsqu'elles sont exécutées sur un processeur d'un système informatique ayant un chargeur (302) et un programme de traitement d'erreurs (304), amènent le processeur à mettre en oeuvre un procédé selon l'une quelconque des revendications 1 à 6.

8. Système informatique comprenant :
un processeur permettant d'exécuter des instructions destinées à appliquer une politique de sécurité pour le système informatique ;
un conteneur d'exécution (100) comportant un chargeur (302), un programme de traitement d'erreurs et un gestionnaire de politiques d'application (102) ;
une logique de gestionnaire de ressources incluse dans le processeur destinée à vérifier le chargeur (302) et à contrôler l'accès à une pluralité de domaines de sécurité ;
un système d'exploitation (OS) invité (200) installé en plus d'un système d'exploitation hôte et comportant une application antivirus (AV) (300), contenue dans des pages protégées de l'OS invité (200) ;
la logique de gestionnaire de ressources fonctionnant à un niveau de sécurité supérieur à celui du chargeur (302) et le chargeur (302) appartenant à un niveau de sécurité supérieur à celui du programme de traitement d'erreurs (304) et de l'application AV (300) ;
l'application AV (300) étant destinée à spécifier une image de code de programme de traitement d'erreurs, un manifeste de programme de traitement d'erreurs, un emplacement mémoire de l'application AV, et un manifeste d'application AV ;
le chargeur (302) étant destiné à vérifier l'image de code de programme de traitement d'erreurs et le manifeste de programme de traitement d'erreurs, pour créer un premier domaine de sécurité ayant un premier niveau de sécurité, copier l'image de code de programme de traitement d'erreurs dans une mémoire associée au premier domaine de sécurité, lancer l'exécution du programme de traitement d'erreurs (304) par le processeur, et demander le verrouillage des pages mémoire dans l'OS invité (200) qui sont réservées pour l'application AV (300) ; le programme de traitement d'erreurs (304) étant destiné à verrouiller l'image de code exécutable de l'application AV (300) en créant des déroutements sur des segments de code sélectionnés dans des pages mémoire de l'OS invité ; et le chargeur (302) étant destiné à mesurer une mémoire d'application AV, comparer la mesure au manifeste d'application AV, et élever l'application AV depuis un deuxième domaine avec un deuxième niveau de sécurité jusqu'au premier domaine de sécurité, lorsque l'application AV (300) est vérifiée avec succès par l'étape de mesure et de comparaison, le premier niveau de sécurité étant supérieur au deuxième niveau de sécurité.

9. Système informatique selon la revendication 9, dans lequel d'autres applications s'exécutant dans l'OS invité (200) sont dans un deuxième domaine de sécurité ayant un deuxième niveau de sécurité.

10. Système informatique selon la revendication 10, dans lequel une application s'exécutant dans le deuxième domaine de sécurité ne peut pas modifier une mémoire dans le premier domaine de sécurité sans déclencher des déroutements détectés par le programme de traitement d'erreurs (304).

11. Système informatique selon la revendication 10, dans lequel le code de noyau de l'OS invité s'exécutant dans le deuxième domaine de sécurité ne peut pas modifier une mémoire dans le premier domaine de sécurité sans déclencher des déroutements détectés par le programme de traitement d'erreurs (304).

12. Système informatique selon la revendication 9, consistant en outre à exécuter l'application AV (300) pour rechercher des programmes malveillants dans le système informatique, en particulier
le programme de traitement d'erreurs (304) étant destiné à vérifier que des messages envoyés à partir de l'application AV (300) proviennent de la mémoire verrouillée de l'OS invité.

13. Système informatique selon la revendication 9, comprenant en outre un gestionnaire de machine virtuelle (VMM) dans l'OS invité (200) permettant d'instancier une machine virtuelle, l'application AV (300) s'exécutant à l'intérieur de la machine virtuelle.

14. Système informatique selon la revendication 9, dans lequel le conteneur d'exécution (100) comprend un environnement d'exécution protégé.
